# EUROPÄISCHE PATENTSCHRIFT

(11) **EP 0 963 927 B1**
(45) Veröffentlichungstag und Bekanntmachung des Hinweises auf die Patenterteilung: **03.08.2005**
(21) Anmeldenummer: 99105764.7
(22) Anmeldetag: 22.03.1999
(51) Int. Cl.: B65G 45/22, D21F 1/32

(54) **Verfahren zum Reinigen eines Transportbandes**
Method for cleaning conveyor-belts
Procédé pour nettoyer des bandes transporteuses

(30) Priorität: 16.05.1998 DE 19822185
(43) Veröffentlichungstag der Anmeldung: 15.12.1999
(73) Patentinhaber: Voith Paper Patent GmbH, 89522 Heidenheim (DE)
(72) Erfinder: Straub, Karlheinz, 89518 Heidenheim (DE); Haberzettl, Dieter, 89520 Heidenheim (DE); Bertram, Birgit, 89522 Heidenheim (DE); Eisler, Johann, 89518 Heidenheim (DE); Herrmann, Lutz-Thomas, 89551 Königsbronn (DE)

(56) Entgegenhaltungen:
- DE-U- 29 517 859
- FR-A- 2 604 199
- US-A- 4 701 242

## Beschreibung

Die Erfindung betrifft ein Verfahren zum Reinigen eines Transportbandes einer Maschine zur Herstellung oder Bearbeitung einer Papier- oder Kartonbahn gemäß Oberbegriff des Anspruchs 1.

Verfahren der angesprochenen Art sind bekannt (DE 195 39 015 C2). Diese werden im Zusammenhang mit einer Materialbahnherstellungs oder -bearbeitungsmaschine eingesetzt und dienen zum Reinigen eines Transportbandes, das während des Betriebs der Maschine verunreinigt wird. Dabei werden die Maschen und Poren des porösen Transportbandes von zum Beispiel Papierfasern, Klebstoffen oder sonstigen Zuschlagsstoffen zugesetzt. Um ein einwandfreies Funktionieren des Transportbandes zu gewährleisten, bedarf es der Reinigung des Transportbandes. Hierfür wird eine Reinigungsvorrichtung eingesetzt, die mindestens eine Düseneinrichtung umfaßt, die wenigstens eine an einem um eine Achse rotierenden Düsenkopf angebrachte Reinigungsdüse umfaßt. Mit Hilfe der Reinigungsdüse kann ein Reinigungsstrahl, beispielsweise Flüssigkeitsstrahl, auf das Transportband gerichtet werden. Um die Reinigungswirkung der rotierenden Reinigungsdüse zu verbessern, ist die Düseneinrichtung an einer Transporteinrichtung angeordnet, die entlang einer quer zur Laufrichtung des Transportbandes verlaufenden Traverse verlagerbar ist. Die Traversiergeschwindigkeit liegt bei der bekannten Reinigungsvorrichtung im Bereich von 0,1 m/min bis 0,5 m/min. Dadurch, daß der Kreisbewegung der Reinigungsdüse eine lineare Traversierbewegung überlagert ist, wird anstelle eines linienförmigen ein relativ breiter streifenförmiger Bereich des Transportbandes gereinigt.

Es hat sich gezeigt, daß durch die Rotation der Reinigungsdüse die Reinigungswirkung in den Kreisbereichen, die in etwa in Laufrichtung des Transportbandes liegen, verstärkt ist. Diese ungleichmä-Bige Reinigung des Transportbandes kann trotz der Travesierbewegung der Reinigungsdüse nicht ausgeglichen werden. Dadurch kann das Feuchteprofil des Transportbandes, das die Eigenschaften der Papier- oder Kartonbahn beeinflußt und daher möglichst niedrig und gleichmäßig sein soll, nicht in gewünschter Weise einstellt werden. Dies führt dazu, daß in den Bereichen, in denen eine verstärkte Reinigungswirkung auftritt, das Transportband stärker durchfeuchtet ist als in den Bereichen des Transportbandes, das die Reinigungsdüse mit verminderter Reinigungswirkung reinigt. Die bekannten Reinigungsvorrichtungen werden bisher aus einem Kompromiß zwischen ausreichender Reinigungswirkung bei gleichzeitig relativ niedrigen Feuchteprofil des Transportbandes betrieben. Es hat sich jedoch gezeigt, daß nicht in allen Fällen ein niedriges und insbesondere gleichmäßiges Feuchteprofil des Transportbandes sowie eine gute Reinigungswirkung der Reinigungsvorrichtung realisierbar ist.

Die US 4,701,242 offenbart eine Reinigungsvorrichtung mit einer an einem Laufwagen gehalterten Reinigungsdüse. Der Laufwagen kann entlang einer festgelegten Bahn mittels einem programmgesteuerten Schrittmotor verfahren werden. Die Position und der Status des Laufwagens wird hierbei durch Sensoren ermittelt.

Es ist daher Aufgabe der Erfindung, das eingangs genannte Reinigungsverfahren derart zu verbessern, daß die genannten Nachteile nicht auftreten.

Zur Lösung der Aufgabe wird ein Reinigungsverfahren mit den Merkmalen des Anspruchs 1 vorgeschlagen. Dieses zeichnet sich dadurch aus, daß die Düseneinrichtung während des Reinigungsvorgangs in mehrere - quer zur Laufrichtung des Transportbandes gesehenhintereinanderliegende Reinigungspositionen auf der Traverse verlagert wird und in der jeweiligen Reinigungsposition eine vorgegebene, insbesondere variierbare, Zeitdauer ortsfest gehalten ist, und daß ein Positionswechsel sprunghaft erfolgt und daß die Reinigungsdüse nach Erreichen eines Seitenrandes des Transportbandes sprunghaft an den anderen Seitenrand des Transportbandes verlagert wird. Im Zusammenhang mit der hier vorliegenden Erfindung wird unter "sprunghaft" eine zum Beispiel schnelle Verlagerung mit relativ hoher Geschwindigkeit verstanden. Die Verlagerung der Düseneinrichtung von einer Reinigungsposition auf der Traverse zur nächsten erfolgt also sehr schnell, so daß an jedem Flächenbereich des Transportbandes eine vorgegebene - vorzugsweise gleich lange-Einwirkdauer des Reinigungsstrahls realisierbar ist. Die Zeitdauer, in der die Reinigungsdüse beziehungsweise die Düseneinrichtung in einer Reinigungsposition angeordnet ist, kann beispielsweise in Abhängigkeit des Verschmutzungsgrades, der Maschinengeschwindigkeit, des Feuchteprofils des Transportbandes und/oder der Rotationsgeschwindigkeit des Düsenkopfes variiert werden. Durch die diskontinuierliche Verlagerung der Düseneinrichtung von einer Reinigungsposition zur nächsten, ist eine gute Reinigungswirkung bei gleichzeitig niedrigem Feuchteprofil realisierbar.

Bei einem vorteilhaften Ausführungsbeispiel des Reinigungsverfahrens ist vorgesehen, daß der Abstand zwischen zwei benachbarten Reinigungspositionen der Reinigungsbreite, zumindest aber im wesentlichen der Reinigungsbreite der um eine Achse rotierenden Reinigungsdüse entspricht. In jeder Reinigungsposition wird also ein streifenförmiger Abschnitt des Transportbandes gereinigt, wobei zwei benachbarte Abschnitte aneinander angrenzen.

Weitere vorteilhafte Ausgestaltungen ergeben sich aus den übrigen Unteransprüchen.

Die Erfindung wird im folgenden anhand der Zeichnung näher erläutert. Es zeigen:
- Figur 1: eine Seitenansicht eines Teils einer Ausführungsform einer Reinigungsvorrichtung zur Durchführung des erfindungsgemäßen Verfahrends und
- Figur 2: einen Querschnitt durch einen Teil einer Bahnhersterstellungs- oder bearbeitungsmaschine im Bereich der Reinigungsvorrichtung.

Die im folgenden beschriebene Reinigungsvorrichtung ist allgemein zum Reinigen eines Transportbandes einer Maschine zur Herstellung oder Bearbeitung einer Papier- oder Kartonbahn einsetzbar. Die Reinigungsvorrichtung kann für beliebige Transportbänder der Maschine eingesetzt werden, beispielsweise für Siebbänder beziehungsweise Filze einer Sieb- beziehungsweise einer Pressen- oder Trockenpartie. Im folgenden wird rein beispielhaft davon ausgegangen, daß es sich hier um auch als Trockensiebbänder bezeichnete Trockensiebe einer Papiermaschine handelt.

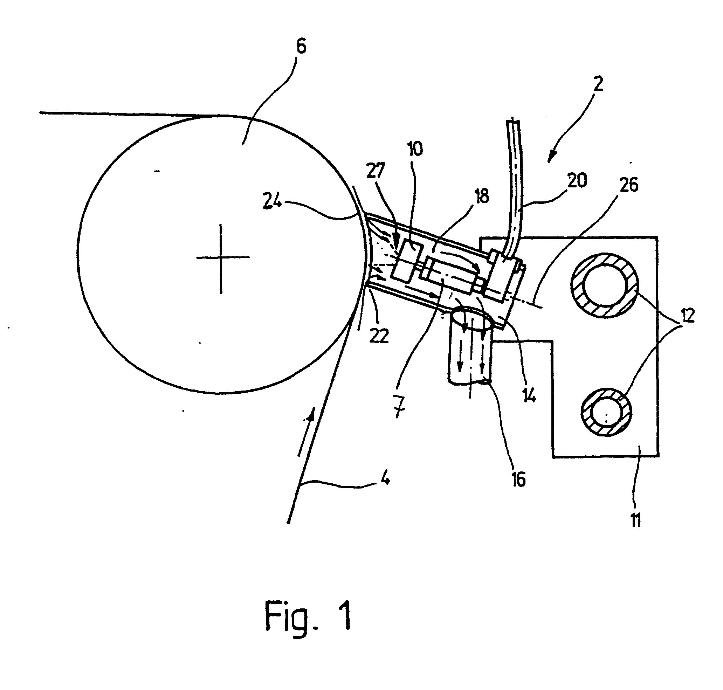

Figur 1 zeigt schematisch eine Seitenansicht einer Ausführungsform einer Reinigungsvorrichtung 2, die zur Reinigung eines im folgenden als Transportband 4 bezeichneten Trockensiebs im Bereich einer Walze 6 einer nicht dargestellten Papiermaschine angeordnet ist. Der Aufbau der Reinigungsvorrichtung 2 ist an sich bekannt, so daß im folgenden lediglich kurz darauf eingegangen wird. Die Reinigungsvorrichtung 2 umfaßt bei diesem Ausführungsbeispiel eine Düseneinrichtung 7, die einen rotierbaren Düsenkopf 10 umfaßt, der eine nicht dargestellte Düsenanordnung aufweist. Diese Düsenanordnung kann eine oder mehrere tangential ausströmende Treibdüsen zur Erzeugung einer Rotationsbewegung im Bereich von beispielsweise 200 U/min bis 3000 U/min umfassen sowie eine oder mehrere Reinigungsdüsen, die das Transportband 4 mit einem Reinigungsmedium, beispielsweise Luft, Dampf oder einer Flüssigkeit, beaufschlagen. Die Rotationsbewegung des Düsenkopfs 10 kann selbstverständlich auch anders erzeugt werden, beispielsweise mit Hilfe eines Motors. Im folgenden wird rein beispielhaft davon ausgegangen, daß es sich bei dem Reinigungsmedium um eine Flüssigkeit handelt.

Des weiteren ist eine zylinderförmige Saugglocke 14 vorgesehen, die die Düseneinrichtung 7 mit dem Düsenkopf 10 umgibt. Das Innere der Saugglocke 14 ist mit einer Absaugleitung 16 verbunden und bildet einen der Düseneinrichtung 7 zugeordneten Saugraum 18.

Die Reinigungsvorrichtung 2 umfaßt eine Energiekette für die Medienversorgung, von der lediglich ein mit einer Hochdruckpumpe verbindbarer Hochdruckschlauch 20 zur Versorgung der Düseneinrichtung 7 mit Flüssigkeit in einem Druckbereich von 100 bar bis 1000 bar sowie die Absaugleitung 16 zum Abführen von Spritzwasser oder Wassernebel mit darin vorhandenen Schmutzpartikeln aus dem Saugraum 18 dargestellt ist.

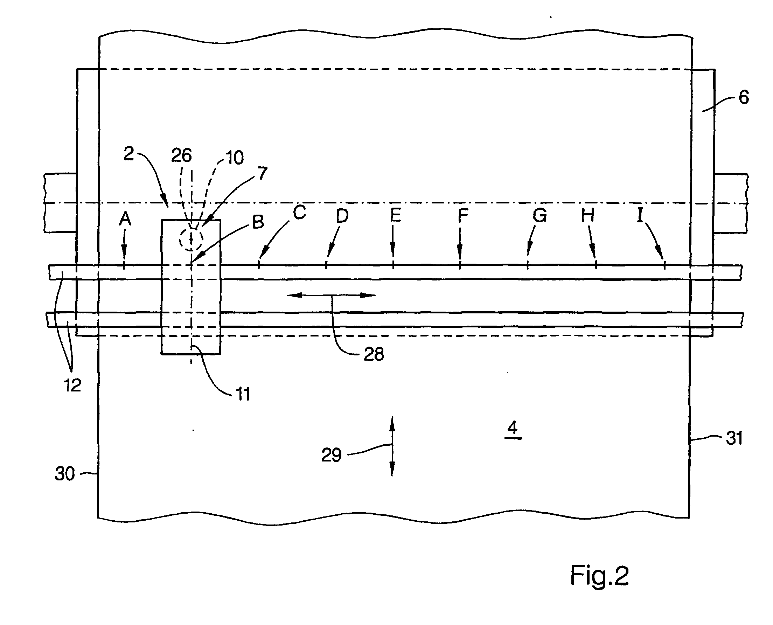

Die bislang beschriebenen Vorrichtungsbestandteile der Reinigungsvorrichtung 2 sind an einer Transporteinrichtung angeordnet, die bei diesem Ausführungsbeispiel von einem Traversierwagen 11 gebildet ist, der in einer Richtung quer zur Laufrichtung des Transportbandes 4 verlagerbar ist. Der Traversierwagen 11 ist entlang einer Traverse verfahrbar, die hier von zwei Querträgern 12 gebildet ist. Der auf den Querträgern 12 sitzende Traversierwagen 11 ist von einem nicht dargestellten Traversiermotor mit einer vorgebbaren Geschwindigkeit antreibbar, worauf im folgenden anhand von Figur 2 näher eingegangen wird.

Wie aus der Figur 1 ersichtlich, ist ein dem Transportband 4 zugewandter Endbereich 22 der Saugglocke 14 der kreiszylindrischen Umfangsform der Walze 6 angepaßt, so daß zwischen der Saugglocke 14 und dem Transportband 4 ein bestimmter einstellbarer Abstand oder Spalt gewährleistet ist, der entlang des Randes 24 des Endbereichs 22 im wesentlichen konstant ist.

Die Positionierung der Reinigungsvorrichtung 2 auf der Walze 6 hat den folgenden Vorteil: Die Maschen des Transportbandes 4 werden durch die Umlenkung an der Walze aufgeweitet, so daß das Reinigungsmedium besonders gleichmäßig in die Gewebeformation des Transportbandes eindringen und Verunreinigungen sehr effektiv entfernen kann.

Im Betrieb der Reinigungsvorrichtung 2 wird die Düsenanordnung im Düsenkopf 10 der Düseneinrichtung 7 über den Hochdruckschlauch 20 mit einem Reinigungsmedium, vorzugsweise mit unter Hochdruck stehendem Wasser, beaufschlagt. Der Düsenkopf 10 mit der Anordnung einzelner -in Figur 1 nicht dargestellter-Reinigungsdüsen wird dabei bei diesem Ausführungsbeispiel durch die Rückstoßwirkung von Treibdüsen in Rotation versetzt. Hierdurch beschreibt der Reinigungsstrahl, hier Flüssigkeitsstrahl, beispielsweise eine in einem bestimmten Winkel zur Längsachse 26 der Düseneinrichtung 7 verlaufende kegelförmige Bahn 27. Die Längsachse 26 fällt hier mit der Drehachse des Düsenkopfs 10 zusammen. Der Reinigungsstrahl trifft daher bei diesem Ausführungsbeispiel unter einem Winkel auf das Transportband 4 auf und löst so die Verunreinigungen von dessen Oberfläche ab.

Es ist auch möglich, den Düsenkopf 10 mit einer oder mehreren schwenkbar gelagerten, eine Oszillationsbewegung durchführenden Reinigungsdüsen auszustattenden, die während der Traversierbewegung des Düseneinrichtung 7 einen bandförmigen Bereich des Transportbandes 4 überstreichen.

Durch die Überlagerung der Traversierbewegung und der Rotations- beziehungsweise Schwenkbewegung werden die Schmutzpartikel unter verschiedenen Richtungen vom Flüssigkeitsstrahl der Düsenanordnung getroffen und können dadurch einfach abgelöst werden. Durch die Neigung des Düsenkopfes 10 beziehungsweise der Düsenanordnung wird ferner bewirkt, daß der auf das Transportband 4 auftreffende Reinigungs-/Flüssigkeitsstrahl in den Saugraum 18 reflektiert wird, so daß der dabei entstehende Wassernebel mit darin gebundenen Schmutzpartikeln sowie Restwasser über die Absaugleitung 16 abgeführt werden können. Es ergibt sich eine durch die Pfeile dargestellte Sogwirkung beziehungsweise Strömung. Um die Saugglocke 14 herum tritt daher kein Spritzwasser auf, ein Schmutz- oder Wasseraustritt kann also weitestgehend vermieden werden.

Figur 2 zeigt stark schematisch einen Querschnitt durch einen Teil der Papiermaschine im Bereich der Walze 6. Teile, die mit denen anhand von Figur 1 beschriebenen übereinstimmen, sind mit gleichen Bezugszeichen versehen, so daß insofern auf die Beschreibung zu Figur 1 verwiesen wird. Vor der am Traversierwagen 11 angebrachten Düseneinrichtung 7 ist lediglich der Düsenkopf 10 mit gestrichelter Linie angedeutet. Mit einem Doppelpfeil 28 ist die Verlagerungsrichtung des Traversierwagens 11 und mit einem Pfeil 29 die Laufrichtung des Transportbandes 4 dargestellt. Aus Figur 2 wird deutlich, daß die Verlagerungsrichtung des Traversierwagens 11 hier genau quer zur Laufrichtung des Transportbandes verläuft. Bei einem anderen -nicht darge-' stellten- Ausführungsbeispiel wird der Traversierwagen schräg zur Laufrichtung des Transportbandes und über dessen gesamte Breite verlagert. Wichtig ist nur, daß während eines Reinigungsvorgangs das mittels der Düseneinrichtung 7 auf das Transportband aufgebrachte Reinigungsmedium jeden Bereich des Transportbandes 4 durch die Traversierbewegung erreicht.

Um eine gleichmäßige Reinigung des Transportbandes über die gesamte Breite sowie ein relativ niedriges und gleichmäßiges Feuchteprofil des Transportbandes 4 sicherzustellen, ist nach einer ersten Ausführungsvariante vorgesehen, daß die Traversiergeschwindigkeit der Düseneinrichtung 7 beziehungsweise des Traversierwagens 11 in einem Bereich von 1 mm/min bis 10 mm/min, vorzugsweise von 2 mm/min bis 5 mm/min liegt.

Der Reinigungsvorgang beginnt vorzugsweise an einem der beiden Seitenränder 30 und 31 des Transportbandes 4. Des weiteren ist vorgesehen, daß während der Verlagerung der Düseneinrichtung 7 von einem Seitenrand des Transportbandes 4 zum anderen die Geschwindigkeit des Traversierwagens 11 konstant ist.

Nachdem die Düseneinrichtung 7 das Transportband 4 über die gesamte Breite gereinigt hat und sofern die Reinigung des Transportbandes noch nicht abgeschlossen ist, kann der Traversierwagen 11 entweder mit der gleichen, mit einer geringeren oder einer höheren Geschwindigkeit zum anderen Seitenrand des Transportbandes 4 zurückverlagert werden, während die Düseneinrichtung 7 weiter das Reinigungsmedium auf das Transportband aufspritzt.

Um sicherzustellen, daß jeder Punkt beziehungsweise Flächenbereich des Transportbandes 4 in gleichen Zeitabständen gereinigt wird, ist bei einer vorteilhaften Ausführungsvariante vorgesehen, daß der Traversierwagen 11 mit der darauf angebrachten Düseneinrichtung 7 nach Erreichen eines der Seitenränder 30, 31 des Transportbandes 4 sprunghaft zum anderen Seitenrand des Transportbandes zurückgefahren wird und dort sofort oder mit einer zeitlichen Verzögerung mit der wiederholten Reinigung des Transportbandes 4 erneut beginnt. Während des Zurückfahrens des Traversierwagens 11 ist die Düseneinrichtung 7 vorzugsweise inaktiv, das heißt es wird kein Reinigungsmedium auf das Transportband 4 aufgebracht. Alternativ ist es möglich, daß die Düseneinrichtung 7 langsam zurückgefahren wird und dabei beispielsweise ein das Transportband trocknenden Gasstrom auf dasselbe aufgebracht wird. Hierzu kann beispielsweise die Reinigungsdüse der Düseneinrichtung 7 verwendet werden, die mittels einer Umschalteinrichtung von der Versorgung mit dem Reinigungsmedium abgekoppelt und mit einer zum Beispiel Druckluftversorgung verbunden wird.

Bei den bereits beschriebenen Ausführungsvarianten beginnt der Reinigungsvorgang an einem der beiden Seitenränder des Transportbandes. Es ist auch möglich, daß der Reinigungsvorgang im mittleren, zwischen den Seitenrändern liegenden Bereich des Transportbandes gestartet wird. Bei dieser Ausführungsvariante wird die Düseneinrichtung 7 bei Erreichen eines der Seitenränder 30, 31 des Transportbandes 4 sehr schnell an den anderen Seitenrand des Transportbandes zurückverlagert und von dort erneut in Richtung des einen Seitenrands verlagert.

Allen Ausführungsvarianten der mit der Reinigungsvorrichtung 2 beschriebenen Verfahren zur Reinigung des Transportbandes 4 ist vorzugsweise gemeinsam, daß die Startposition, an der die Düseneinrichtung 7 mit der Reinigung des Transportbandes 4 beginnt, auch gleichzeitig die Endposition ist, an der die Reinigung des Transportbandes endet.

Bei dem erfindungsgemäßen Verfahren ist vorgesehen, daß die Düseneinrichtung 7 während des Reinigungsvorgangs in mehrere Reinigungspositionen auf der Traverse beziehungsweise den Querträgern 12 verlagert wird und in der jeweiligen Reinigungsposition eine vorgegebene Zeitdauer ortsfest gehalten ist. Der Wechsel von einer Reinigungsposition in die nächste erfolgt sprunghaft. In Figur 2 sind rein beispielhaft gedachte Reinigungspositionen A bis I dargestellt, die bei diesem Ausführungsbeispiel im gleichen Abstand zueinander angeordnet sind, das heißt, der Abstand zwischen zum Beispiel den Reinigungspositionen A und B, F und G oder F und E ist gleich groß.

Bei der in Figur 2 dargestellten Funktionsstellung der Reinigungsvorrichtung 2 ist die Düseneinrichtung 7 in der Reinigungsposition B angeordnet. Während eines Reinigungsvorgangs, bei dem das Transportband 4 vorzugsweise über die gesamte, zumindest aber im wesentlichen über die gesamte Breite gereinigt wird, ist vorgesehen, daß die Düseneinrichtung 7 nacheinander in jede der Reinigungspositionen A bis I verlagert wird. Wenn der Reinigungsvorgang beispielsweise bei der Reinigungsposition A beginnt, wird die Reinigungsdüse 7 als nächstes in die Reinigungsposition B, dann in die Reinigungsposition C usw. verlagert und bleibt in jeder dieser Positionen die gleiche Zeitdauer angeordnet. Beginnt der Reinigungsvorgang auf der anderen Seite des Transportbandes 4, also im Bereich des Seitenrandes 31, wird die Düseneinrichtung 7 zunächst in die Reinigungsposition I, dann in die Reinigungsposition H usw. verlagert. Aus allem wird deutlich, daß die Düseneinrichtung 7 hier während eines Reinigungsvorgangs diskontinuierlich verfahren wird.

Auch bei diesem Ausführungsbeispiel des erfindungsgemäßen Verfahrens ist es möglich, daß die Düseneinrichtung 7 nach Erreichen einer der End- beziehungsweise Anfangspositionen A und I wieder zurückverlagert wird in die erste Reinigungsposition am anderen Seitenrand des Transportbandes 4, so daß auch hier jeder Punkt beziehungsweise Flächenbereich des Transportbandes 4 in gleichen Zeitabständen gereinigt wird. Der Reinigungsvorgang kann beispielsweise außer in den Reinigungspositionen A und I auch in einer der anderen Reinigungspositionen, zum Beispiel H oder E, beginnen, so daß die Düseneinrichtung 7 das Transportband 4 -ausgehend von einem zwischen den Seitenrändern 30, 31 liegenden Bereich des Transportbandes 4- in Richtung eines der Seitenränder reinigt. Auch bei diesem Ausführungsbeispiel ist vorgesehen, daß die Düseneinrichtung 7 bei Erreichen eines der Seitenränder des Transportbandes vorzugsweise schnell zum anderen Seitenrand verlagert wird und dort der Reinigungsvorgang fortgesetzt wird.

Nach allem wird deutlich, daß es für ein gleichmäßiges Reinigen des Transportbandes 4 und das Einstellen eines gleichmäßigen und niedrigen Feuchteprofils des Transportbandes 4 es nicht darauf ankommt, an welcher Stelle des Transportbandes das Reinigen beginnt oder endet. Wichtig ist nur, daß die Düseneinrichtung 7 während der Reinigung entweder nur sehr langsam quer über die Breite des Transportbandes verfahren wird oder in mehreren Reinigungspositionen eine gleich lange Zeitdauer verweilt.

Bei einem bevorzugten Ausführungsbeispiel ist vorgesehen, daß der Abstand zwischen zwei benachbarten Reinigungspositionen, also beispielsweise zwischen den Reinigungspositionen A und B oder D und E der Reinigungsbreite der -nicht dargestellten- um die Längsachse 26 rotierenden Reinigungsdüse entspricht. Die Reinigungsbreite der rotierenden Reinigungsdüse liegt in einem Bereich von 2 mm bis 100 mm, vorzugsweise von 10 mm bis 50 mm.

Die Zeitdauer, in der die Düseneinrichtung 7 in einer der Reinigungspositionen A bis I angeordnet ist, liegt in einem Bereich von 6 sec bis 10 min, vorzugsweise von 1 min bis 5 min. Selbstverständlich ist es auch möglich, daß die Zeitdauer auch weniger als 6 sec oder mehr wie 10 min beträgt. Dies ist beispielsweise in Abhängigkeit vom Druck des Reinigungsmediums, dem Durchmesser der Reinigungsdüse, der Maschinengeschwindigkeit und/oder dem Verunreinigungsgrad des Transportbandes 4 einstellbar.

Aus allem wird deutlich, daß die Anzahl der Reinigungspositionen, in die die Düseneinrichtung 7 verlagerbar ist, auch mehr als neun und gegebenenfalls auch weniger als neun betragen kann. Dies ist beispielsweise abhängig von der Breite des Transportbandes und/oder der Reinigungsbreite der Reinigungsdüse.

Bei einem weiteren -in den Figuren 1 und 2 nicht dargestellten- Ausführungsbeispiel sind mehrere Reinigungsvorrichtungen 2 auf der von den Querträgern 12 gebildeten Traverse angeordnet und auf dieser verfahrbar, so daß große Flächenbereiche des Transportbandes 4 gleichzeitig gereinigt werden können. Je größer die Anzahl der Reinigungsvorrichtungen, desto größer ist der Anteil der Flächenbereiche des Transportbandes 4, die den gleichen Reinheitsgrad und vorzugsweise auch das gleiche niedrige Feuchteprofil aufweisen.

Zusammenfassend ist festzuhalten, daß mit den oben beschriebenen Verfahrensvarianten zum Reinigen eines Transportbandes einer Maschine zur Herstellung oder Bearbeitung einer Papier- oder Kartonbahn, ein gleichmäßiges Reinigen und ein relativ niedriges und gleichmäßiges Feuchteprofil des Transportbandes realisierbar ist. Durch das erfindungsgemäße Reinigen des Transportbandes kann dessen einwandfreie Funktion gewährleistet werden.

## Patentansprüche

1. Verfahren zum Reinigen eines Transportbandes einer Maschine zur Herstellung oder Bearbeitung einer Papier- oder Kartonbahn, zum Beispiel eines Trokken- oder Naßsiebbandes oder eines Filzbandes einer Papierherstellungsmaschine, mit Hilfe von mindestens einer um eine Achse rotierenden, quer zur Laufrichtung des Transportbandes verlagerbaren Reinigungsdüse, aus der ein auf das Transportband gerichteter Reinigungsstrahl austritt, **dadurch gekennzeichnet, daß** die Reinigungsdüse während des Reinigungsvorgangs mehrere -quer zur Laufrichtung des Transportbandes gesehen- hintereinanderliegende Reinigungspositionen einnimmt und in diesen jeweils eine vorgegebene Zeitdauer verweilt, daß ein Positionswechsel sprunghaft erfolgt und daß die Reinigungsdüse nach Erreichen eines Seitenrandes des Transportbandes sprunghaft an den anderen Seitenrand des Transportbandes verlagert wird.

2. Verfahren nach Anspruch 1, **dadurch gekennzeichnet, daß** der Reinigungsvorgang an einem Seitenrand des Transportbandes beginnt.

3. Verfahren nach einem der vorhergehenden Ansprüche, **dadurch gekennzeichnet, daß** -in Laufrichtung des Transportbandes gesehen- der maximale Abstand zwischen zwei benachbarten Reinigungspositionen der Reinigungsbreite der rotierenden Reinigungsdüse entspricht.

4. Verfahren nach einem der vorhergehenden Ansprüche, **dadurch gekennzeichnet, daß** der Abstand zwischen zwei Reinigungspositionen in einem Bereich von 2 mm bis 100 mm, vorzugsweise von 10 mm bis 50 mm, liegt.

5. Verfahren nach einem der vorhergehenden Ansprüche, **dadurch gekennzeichnet, daß** die Zeitdauer, in der Reinigungsdüse in einer Reinigungsposition verweilt, in einem Bereich von 0,1 min bis 10 min, vorzugsweise von 1 min bis 5 min, liegt.

## Claims

1. Method for cleaning a transport belt of a machine for producing or processing a paper or board web, for example a dry or wet fabric belt or a felt of a papermaking machine, with the aid of at least one cleaning nozzle which rotates about an axis, can be displaced transversely with respect to the running direction of the transport belt and from which a cleaning jet aimed at the transport belt emerges, **characterized in that**, during the cleaning operation, the cleaning nozzle assumes a plurality of cleaning positions located one after another, as viewed transversely with respect to the running direction of the transport belt, and remains in these positions for a predefined time period in each case, **in that** a position change is made abruptly, and **in that**, after reaching a lateral edge of the transport belt, the cleaning nozzle is displaced abruptly to the other lateral edge of the transport belt.

2. Method according to Claim 1, **characterized in that** the cleaning operation begins at a lateral edge of the transport belt.

3. Method according to one of the preceding claims, **characterized in that**, as viewed in the running direction of the transport belt, the maximum spacing between two adjacent cleaning positions corresponds to the cleaning width of the rotating cleaning nozzle.

4. Method according to one of the preceding claims, **characterized in that** the spacing between two cleaning positions lies in a range from 2 mm to 100 mm, preferably from 10 mm to 50 mm.

5. Method according to one of the preceding claims, **characterized in that** the time period in which the cleaning nozzle remains in a cleaning position lies in a range from 0.1 min. to 10 min., preferably from 1 min. to 5 min.

## Revendications

1. Procédé pour nettoyer une bande transporteuse d'une machine de fabrication ou de traitement d'une nappe de papier ou de carton, par exemple d'une bande de toile sèche ou humide ou d'une bande de feutre d'une machine de fabrication de papier, à l'aide d'au moins une buse de nettoyage tournant autour d'un axe, déplaçable transversalement à la direction d'avance de la bande transporteuse, de laquelle sort un jet de nettoyage orienté sur la bande transporteuse, **caractérisé en ce que** la buse de nettoyage adopte plusieurs positions de nettoyage situées les unes derrière les autres, vu transversalement à la direction d'avance de la bande transporteuse, pendant l'opération de nettoyage, et passe à chaque fois un temps prédéfini dans ces positions, **en ce qu'**un changement de position s'effectue par saut et **en ce que** la buse de nettoyage, une fois qu'elle a atteint un bord latéral de la bande transporteuse, est déplacée par saut à l'autre bord latéral de la bande transporteuse.

2. Procédé selon la revendication 1, **caractérisé en ce que** l'opération de nettoyage commence au niveau d'un bord latéral de la bande transporteuse.

3. Procédé selon l'une quelconque des revendications précédentes, **caractérisé en ce que** - vu dans la direction d'avance de la bande transporteuse - la distance maximale entre deux positions de nettoyage voisines correspond à la largeur de nettoyage de la buse de nettoyage rotative.

4. Procédé selon l'une quelconque des revendications précédentes, **caractérisé en ce que** la distance entre deux positions de nettoyage est comprise dans une plage de 2 mm à 100 mm, de préférence de 10 mm à 50 mm.

5. Procédé selon l'une quelconque des revendications précédentes, **caractérisé en ce que** la durée pendant laquelle la buse de nettoyage reste dans une position de nettoyage est comprise dans une plage de 0,1 min à 10 min, de préférence de 1 min à 5 min.
